# EUROPÄISCHE PATENTSCHRIFT

(11) **EP 1 040 286 B1**
(45) Veröffentlichungstag und Bekanntmachung des Hinweises auf die Patenterteilung: **07.11.2001**
(21) Anmeldenummer: 98966335.6
(22) Anmeldetag: 15.12.1998
(51) Int. Cl.: F16H 41/24

(54) **AUTOMATGETRIEBE**
AUTOMATIC GEAR BOX
TRANSMISSION AUTOMATIQUE

(30) Priorität: 19.12.1997 DE 19756684
(43) Veröffentlichungstag der Anmeldung: 04.10.2000
(73) Patentinhaber: ZF Batavia, L.L.C., Plymouth, MI 48170-2456 (US)
(72) Erfinder: ROWE, Gerald, D-88131 Lindau (DE)
(74) Vertreter: Zietlow, Karl-Peter
(86) Internationale Anmeldenummer: EP9808219
(87) Internationale Veröffentlichungsnummer: WO9932803

(56) Entgegenhaltungen:
- DE-A- 19 706 735
- US-A- 3 799 000
- US-A- 4 572 339
- M.BOOS,W.-E.KRIEG: "Stufenloses Automatgetriebe Ecotronic von ZF", ATZ AUTOMOBILTECHNISCHE ZEITSCHRIFT, , , Band 96(1994), Nr. 6, Seiten 378 - 384

## Beschreibung

Die Erfindung betrifft ein Automatgetriebe für Kraftfahrzeuge, insbesondere ein CVT-Getriebe, mit einem Wandler nach der im Oberbegriff des Anspruches 1 näher definierten Art.

Aus der ATZ Automobiltechnische Zeitschrift 96 (1994), Seite 380, ist ein stufenloses Automatgetriebe bekannt, welches einen Wandler, einen an dem Wandlergehäuse ausgebildeten Mitnahmefinger des Pumpenantriebes und eine auf einer Leitradwelle angeordnete Gleitbuchse für den Wandler aufweist, wobei die Gleitbuchse in montiertem Zustand des Automatgetriebes zwischen dem Wandler bzw. dem Wandlergehäuse und der Leitradwelle positioniert ist. Darüber hinaus ist zwischen dem Getriebegehäuse und dem Wandler im Bereich des Pumpenantriebes ein Radialwellendichtring angeordnet, dessen Dichtlippe auf dem Wandler aufliegt.

Bei diesem bekannten Automatgetriebe wird der Wandler bei der Montage auf die Leitradwelle in axialer Richtung aufgeschoben, wobei der Mitnahmefinger zwischen dem Radialwellendichtring und der Leitradwelle hindurchgeführt werden muß.

Nachteilig ist jedoch dabei, daß während der Montage des Wandlers der Radialwellendichtring bzw. die Dichtlippe durch einen Radialversatz des Mitnahmefingers beschädigt werden kann. Um dies zu vermeiden, muß der Wandler vorsichtig und zeitaufwendig auf die Leitradwelle aufgesetzt werden, was für eine Serienmontage unpraktikabel ist.

Der vorliegenden Erfindung liegt daher die Aufgabe zugrunde, ein Automatgetriebe zu schaffen, bei dem eine Beschädigung des Radialwellendichtringes während der Montage des Wandlers auf der Leitradwelle vermieden wird.

Erfindungsgemäß wird diese Aufgabe durch die im kennzeichnenden Teil des Anspruches 1 genannten Merkmale gelöst.

Durch die erfindungsgemäße Ausgestaltung der Gleitbuchse mit einem sich wenigstens abschnittsweise über den Umfang der Gleitbuchse erstreckenden Bund wird bei der Montage eine Vorzentrierung des Wandlers auf der Leitradwelle mittels des Bundes erreicht, wodurch ein Radialversatz des Mitnahmefingers auf vorteilhafte Weise vermieden wird.

Die Länge des Bundes ist in vorteilhafter Weise derart dimensioniert, daß die Vorzentrierung des Wandlers bereits dann vorhanden ist, bzw. daß der Bund auf der Leitradwelle aufsetzt, bevor der Mitnahmefinger zwischen Radialwellendichtring und Leitradwelle hindurchgeführt wird.

Eine abschnittsweise Ausbildung des Bundes bewirkt eine Materialersparnis, die eine Gewichtsersparnis des Automatgetriebes zur Folge hat.

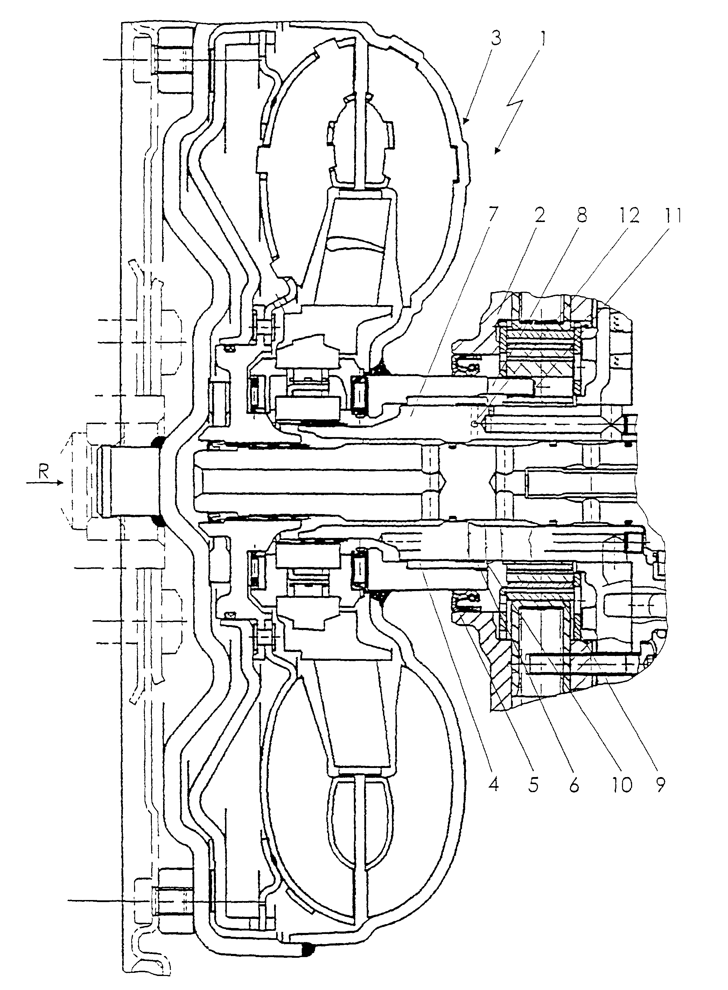

Vorteilhafte Ausgestaltungen und Weiterbildungen der Erfindung ergeben sich aus den Unteransprüchen und aus dem nachfolgend anhand der Zeichnung prinzipmäßig beschriebenen Ausführungsbeispiel.

Die einzige Figur der Zeichnung zeigt einen Ausschnitt eines CVT-Automatgetriebes 1 mit einem Getriebegehäuse 2, einem Wandler 3 und einer Gleitbuchse 4 für den Wandler 3, welche auf ihrer einem Radialwellendichtring 5 zugewandten Seite mit einem sich über den Umfang der Gleitbuchse 4 erstreckenden Bund 6 ausgeführt ist. Die Gleitbuchse 4 ist dabei als Gleitlager zwischen dem Wandler 3 und einer Leitradwelle 7 vorgesehen.

Der Radialwellendichtring 6 ist in dem Getriebegehäuse 2 zur Abdichtung zwischen dem Wandler 3 und dem Getriebegehäuse 2 angeordnet. Darüber hinaus ist an dem Wandler 3 ein Mitnahmefinger 8 eines Pumpenantriebes 9 ausgebildet, der bei der Montage des Wandlers 3 auf der Leitradwelle 6 zwischen Leitradwelle 6 und Radialwellendichtring 7 hindurchgeführt wird.

Die Länge des Bundes 6 ist derart dimensioniert, daß bei der Montage des Wandlers 3 auf der Leitradwelle 7 ein Ende 10 des Bundes 6, welches auf der dem Wandler 3 abgewandten Seite des Bundes 6 angeordnet ist, an der Leitradwelle 7 anliegt und gleichzeitig der Mitnahmefinger 8 mit seiner Stirnseite 11, die auf der dem Wandler 3 abgewandten Seite des Mitnahmefingers 8 ausgebildet ist, auf der dem Wandler 3 zugewandten Seite des Radialwellendichtringes 5 angeordnet ist.

Diese Montagestellung des Wandlers 3, in welcher der Bund 6 im Bereich seiner Stirnseite 10 einen Abschnitt der Leitradwelle 7 axial überschneidet, in dem die Leitradwelle 7 einen Durchmesser aufweist, welcher mit dem Innendurchmesser der Gleitbuchse eine Gleitlagerpassung bildet, stellt den Beginn der Zentrierung dar.

Der Wandler 3 wird während der Montage in axialer Richtung R zusammen mit der Gleitbuchse 4 und dem daran ausgebildeten Bund 6 auf die Leitradwelle 7 aufgeschoben, wobei der Wandler 3 ab dem Zeitpunkt des Aufsetzens des Bundes 6 auf die Leitradwelle 7 mittels des Bundes 6 auf der Leitradwelle 7 vorzentriert ist. Die Vorzentrierung des Wandlers 3 auf der Leitradwelle 7 verhindert einen Radialversatz des Mitnahmefingers 8 aus dieser radialen Position. Die Stirnseite der Gleitbuchse 4 trifft auf die Leitradwelle 7, bevor der Mitnahmefinger 8 auf der Radialwellendichtung 5 auftrifft. Damit wird in wirkungsvoller Weise verhindert, daß der Radialwellendichtring 5 durch den Mitnahmefinger 8 beschädigt wird.

In dem Ausführungsbeispiel gemäß der Figur entspricht der Außendurchmesser des Bundes 6 dem Außendurchmesser der gesamten Gleitbuchse 4.

In einer hiervon abweichenden Ausführung kann der Aussendurchmesser des Bundes 6 auch kleiner als der Außendurchmesser der Gleitbuchse 4 ausgebildet sein, so daß bei einem Einfügen der Gleitbuchse 4 mit dem Bund 6 in den Wandler 3 geringere Fügekräfte erforderlich sind.

In einer weiteren Ausführungsvariante des Bundes 6 kann es selbstverständlich auch vorgesehen sein, daß sich der Bund 6 lediglich über einen Teil des Umfanges der Gleitbuchse 4 erstreckt.

Der Innendurchmesser des Bundes 6 ist im vorliegenden Ausführungsbeispiel größer dimensioniert als der Innendurchmesser der Gleitbuchse 4. Dies hat den Vorteil, daß eine grobe Zentrierung durch den Bund 6 bei dessen Auftreffen auf die Leitradwelle 7 während der Montage gegeben ist. Damit wird verhindert, daß die Gleitbuchse 6 direkt mit ihrer Lagerfläche auf der Leitradwelle 7 zentriert wird, wobei die Lagerfläche verletzt werden könnte.

Die Ausgestaltung des Bundes 6 mit einem größeren Innendurchmesser als ihn die Gleitbuchse 4 hat, ist des weiteren vorteilhaft, da im eingebauten Zustand ein radialer Abstand zur Leitradwelle 7 vorhanden ist, welcher das ungehinderte Austreten von Öl für eine Primärscheibendruckzuführung aus einer nur schematisch in der Figur angedeuteten Querbohrung 12 der Leitradwelle 7 erlaubt.

### Bezugszeichen

- 1: Automatgetriebe
- 2: Getriebegehäuse
- 3: Wandler
- 4: Gleitbuchse
- 5: Radialwellendichtring
- 6: Bund
- 7: Leitradwelle
- 8: Mitnahmefinger
- 9: Pumpenantrieb
- 10: Stirnseite des Bundes
- 11: Stirnseite des Mitnahmefingers
- 12: Querbohrung

## Patentansprüche

1. Automatgetriebe, insbesondere CVT-Getriebe, mit
- einem Getriebegehäuse (2),
- einem Wandler (3) und einer Gleitbuchse (4) für den Wandler, welche im montierten Zustand zwischen dem Wandler und einer Leitradwelle (7) angeordnet ist und deren Innendurchmesser mit dem Durchmesser der Leitradwelle eine Gleitlagerpassung bildet,
- einem in dem Getriebegehäuse angeordneten Radialwellendichtring (5), welch er im montierten Zustand zwischen dem Getriebegehäuse und dem Wandler angeordnet ist, und
- mit einem an dem Wandler ausgebildeten Mitnahmefinger (8), der im montierten Zustand Teil eines Pumpenantriebes (9) ist,
**gekennzeichnet durch** folgende Merkmale:
- die Gleitbuchse (4) weist in Montagerichtung (R) des Wandlers (3), entgegen dem Getriebegehause (2), einen sich wenigstens abschnittsweise über ihren Umfang erstreckenden Bund (6) auf,
- der Bund weist einen Innendurchmesser auf, der größer ist als der Innendurchmesser der Gleitbuchse,
- die Länge des Bundes ist derart dimensioniert, daß in einer den Beginn einer Zentrierung darstellenden Montagestellung des Wandlers eine Stirnseite (11) des Mitnahmefingers (8) auf der dem Wandler zugewandten Seite des Radialwellendichtringes (5) positioniert ist,
- in der Montagestellung des Wandlers überschneidet der Bund (6) im Bereich seiner Stirnseite (10) axial einen Abschnitt der Leitradwelle (7), so daß bei der Montage zunächst die Stirnseite des Bundes auf die Leitradwelle auftrifft, bevor der Mitnahmefinger auf den Radialwellendichtring auftrifft, wodurch eine Vorzentrierung erfolgt und ein Radialversatz des Mitnahmefingers und somit eine Beschädigung des Radialwellendichtringes verhindert wird.

2. Automatgetriebe nach Anspruch 1, **dadurch gekennzeichnet, daß** sich der Bund (6) über den gesamten Umfang der Gleitbuchse (4) erstreckt.

3. Automatgetriebe nach Anspruch 1 oder 2, **dadurch gekennzeichnet, daß** der Bund (6) einen Außendurchmesser aufweist, der wenigstens annähernd gleich dem Außendurchmesser der Gleitbuchse (4) ist.

## Claims

1. An automatic transmission, in particular a CVT, comprising
- a transmission housing (2), a converter (3) and a sliding sleeve (4), which in the assembled condition is arranged between the converter and a stator shaft (7) and whose inner diameter forms a sliding bearing seat together with the diameter of the stator shaft;
- a shaft seal (5) arranged in the transmission housing, which in the assembled condition is arranged between the transmission housing and the converter;
- and a driver (8) on the converter, which in the assembled condition is part of a pump drive (9),
**characterized by** the following features:
- in direction of assembly (R) of the converter (3), opposite the transmission housing (2), the sliding sleeve (4) has a collar (6) which extends at least across sections of its circumference;
- the collar has an inner diameter larger than that of the sliding sleeve;
- the length of the collar is such that in a converter assembly position representing the start of centering, one face end (11) of the driver (8) is positioned on the side of the shaft seal (5) facing the converter;
- in converter assembly position, the collar (6) in the area of its face end (10) cuts axially through a section of the stator shaft (7), so that during assembly the face end of the collar first contacts the stator shaft before the driver contacts the shaft seal, which causes pre-centering and radial displacement of the driver and thus prevents damage to the shaft seal.

2. An automatic transmission according to claim 1,
**characterized in that** the collar (6) extends across the entire circumference of the sliding sleeve (4).

3. An automatic transmission according to claim 1 or 2,
**characterized in that** the collar (6) has an outer diameter, which is almost the same as the outer diameter of the sliding sleeve (4).

## Revendications

1. Boîte de vitesses automatique, plus particulièrement une boîte à variation continue (CVT), dotée d'un carter de boîte de vitesses (2),
- boîte automatique dotée d'un convertisseur (3) et d'une douille de guidage (4) du convertisseur, qui est disposée, lorsqu'elle est montée, entre le convertisseur et un arbre du stator (7) et dont le diamètre intérieur forme avec le diamètre de l'arbre du stator un siège d'emmanchement de palier coulissant,
- boîte automatique dotée d'une bague à lèvres avec ressort (5) logée dans le carter de la boîte de vitesses, sachant que la bague à lèvres est disposée, lorsqu'elle est montée, entre le carter de le boîte de vitesses et le convertisseur,
- boîte automatique dotée d'un doigt d'entraînement (8) solidaire du convertisseur, qui, lorsqu'il est monté, est partie intégrante du mécanisme d'entraînement de la pompe (9), **caractérisée en ce que** :
- la douille de guidage (4) comporte dans le sens de montage (R) du convertisseur (3), et en sens opposé de pose du carter de la boîte de vitesses (2), une embase (6) s'étendant au moins dans certaines sections sur le pourtour de la douille,
- le diamètre intérieur de l'embase est plus grand que celui de la douille de guidage,
- la longueur de l'embase est dimensionnée de façon à ce que, dans une position de montage du convertisseur représentant le début d'un centrage, une face frontale (11) du doigt d'entraînement (8) soit positionnée du côté de la bague à lèvres (5) orienté vers le convertisseur,
- dans la position de montage du convertisseur, l'embase (6) dépasse axialement, au niveau de sa face frontale (10), une section de l'arbre du stator (7), de façon à ce que lors du montage la face frontale de l'embase vient se plaquer tout d'abord contre l'arbre du stator, avant que le doigt d'entraînement vienne se plaquer contre la bague à lèvres, d'où se produit un pré-centrage et un décalage dans le sens radial du doigt d'entraînement, évitant, ainsi, la détérioration de la bague à lèvres.

2. Boîte de vitesses automatique, d'après la revendication 1, **caractérisée en ce que** l'embase (6) s'étend sur le pourtour total de la douille de guidage.

3. Boîte de vitesses automatique, d'après les revendications 1 ou 2,
**caractérisée en ce que** l'embase (6) comporte un diamètre extérieur ayant approximativement le même diamètre extérieur que la douille de guidage (4).
